# EUROPEAN PATENT SPECIFICATION

(11) **EP 0 465 112 B1**
(45) Date of publication and mention of the grant of the patent: **28.02.1996**
(21) Application number: 91305795.6
(22) Date of filing: 26.06.1991
(51) Int. Cl.: G11B 23/087

(54) **Tape cassette**
Bandkassette
Cassette à bande

(30) Priority: 29.06.1990 JP 171711/90
(43) Date of publication of application: 08.01.1992
(73) Proprietor: SONY CORPORATION, Tokyo 141 (JP)
(72) Inventor: Fujii, Hiroshi, c/o Patents Division, Shinagawa-ku, Tokyo 141 (JP)
(74) Representative: Purvis, William Michael Cameron

(56) References cited:
- EP-A- 0 045 084
- GB-A- 2 116 520
- GB-A- 2 243 144
- JP-A-60 214 488
- US-A- 4 685 016
- PATENT ABSTRACTS OF JAPAN vol. 8, no. 51 (P-259)(1488) 8 March 1984
- PATENT ABSTRACTS OF JAPAN vol. 7, no. 150 (P-207)(1295) 30 June 1983

## Description

The invention relates to a tape cassette.

Tape cassettes are used in recording and reproducing apparatus such as video tape recorders (VTRs) and a variety of information processing apparatus, and generally have tape outlets through which a magnetic tape can be withdrawn from a cassette casing, the tape outlets being openable and closable by lids.

One conventional tape cassette for VTRs comprises a cassette casing having a pair of tape outlets defined in a front wall thereof at opposite ends for drawing out a magnetic tape contained in the cassette casing. The tape cassette also has a front lid pivotally supported on the cassette casing over the front wall so as normally to cover the tape outlets to protect the drawn-out length of the magnetic tape which could otherwise be damaged by foreign matter brought into contact therewith. When the tape cassette is loaded into a VTR, the front lid of the tape cassette is engaged by a lid opening member in the VTR and turned upwardly to expose the magnetic tape. The VTR has a plurality of tape guides to form a predetermined tape path along which runs the magnetic tape withdrawn out of the cassette casing.

The cassette casing also has a recess defined in the lower panel thereof near the front wall and contiguous to the tape outlets. The recess serves as a mouth to receive a tape loading guide which will be positioned behind the tape length that extends between the tape outlets. The tape loading guide moves to pull the magnetic tape out of the cassette casing when the tape cassette is loaded into the VTR. Since the mouth opens downwardly, even when the front lid is closed, it allows dust or foreign matter to become applied to the magnetic tape, and also allows a user's finger to be accidentally inserted so as to touch the magnetic tape, applying a fingerprint to the magnetic tape. The dust deposit or fingerprint on the magnetic tape may cause signal dropouts when audio and video information is being recorded on or reproduced from the magnetic tape.

Patent Specification JP-A-58-128070 discloses a solution to the above problem and provides a tape cassette similar to the conventional tape cassette described above, but additionally having an inner lid for normally covering the rear side of the magnetic tape length extending between the tape outlets, the inner lid being disposed inwardly of the front lid. When the front lid is closed, the magnetic tape length between the tape outlets is sandwiched and sealed between the front and inner lids, so that the magnetic tape is reliably protected against damage from dust particles or the like. When the tape cassette is inserted into a VTR, the front and inner lids are opened, and a tape loading guide is inserted into the mouth for loading the magnetic tape along the tape path in the VTR.

More specifically, when the tape cassette is horizontally inserted into the VTR and then moved downwardly into a cassette loading position, the front lid is turned upwardly by the lid opening member which engages the lower edge of the front lid. At the same time, the inner lid is moved upwardly and rearwardly. Therefore, the front and inner lids are displaced away from the magnetic tape, i.e., opened, thereby opening the tape outlets and the mouth to allow the magnetic tape to be loaded along the tape path.

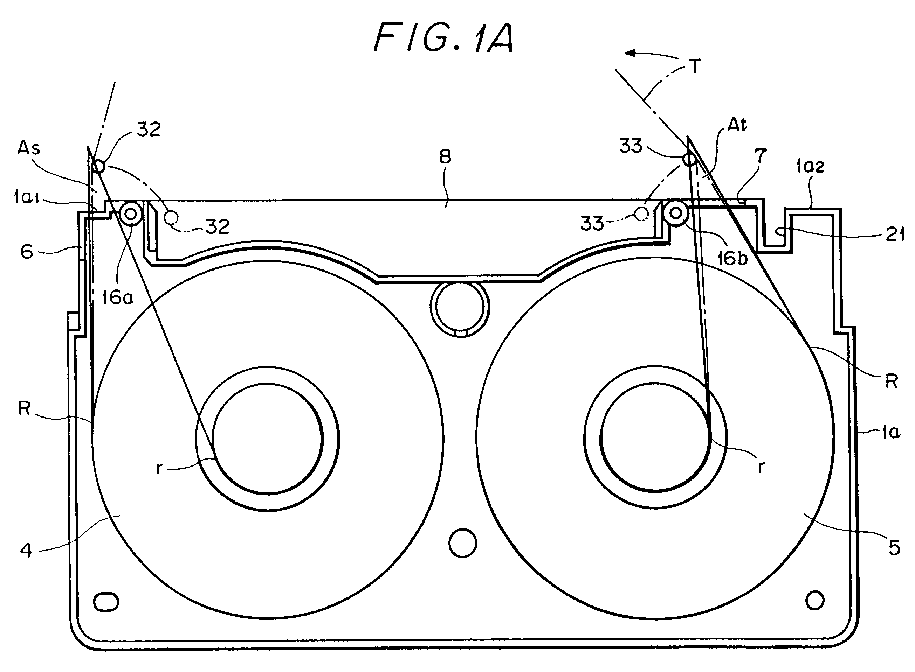

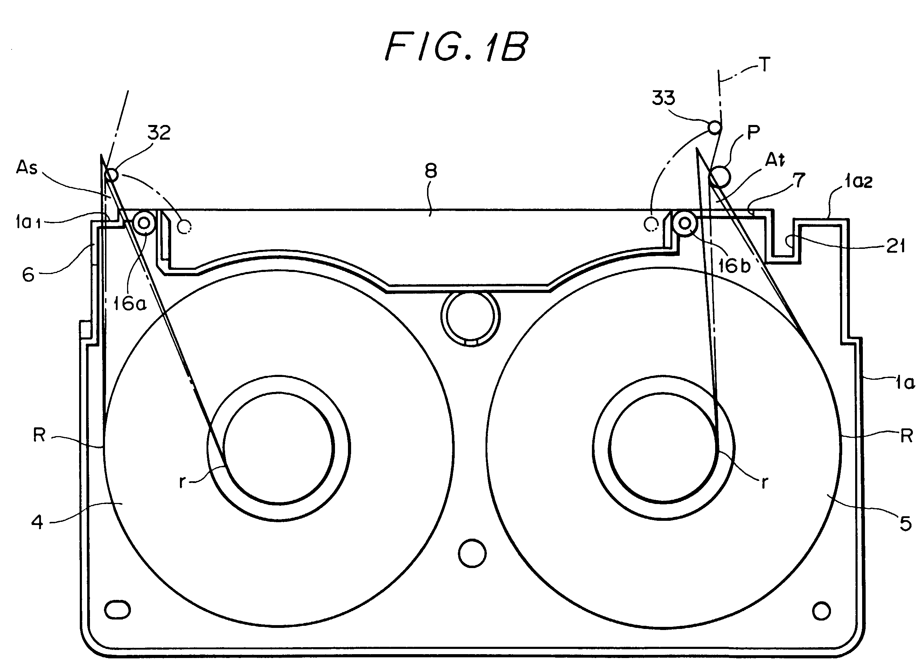

Tape cassettes of the kind described above have tape guides disposed within the cassette casing. Since the magnetic tape runs in sliding contact with the tape guides, the accuracy of the tape path is affected by the tape guides. Figures 1A and 1B show a conventional tape cassette which is designed to alleviate such a drawback.

As shown in Figures 1A and 1B, the tape cassette comprises a cassette casing 1a having a pair of wide tape outlets 6, 7 defined in a front wall thereof at opposite ends, respectively, for drawing a magnetic tape T out of the cassette casing 1a. When the tape cassette is loaded into a VTR, the magnetic tape T is drawn out of the cassette casing 1a through the tape outlets 6, 7 and loaded along a tape path in the VTR by a pair of tape loading guides 32, 33 angularly movably disposed near the respective tape outlets 6, 7. As the coils of the magnetic tape T on tape reels 4, 5 vary in diameter between a maximum diameter R and a minimum diameter r, the magnetic tape T is held out of contact with tape guides 16a, 16b in the cassette casing and inner walls thereof, and traverses triangular areas As, At at the respective tape outlets 6, 7.

The front wall of the cassette casing has abutment surfaces 1a1, 1a2 at the opposite ends, the abutment surfaces 1a1, 1a2 being identical to those of existing VHS-format tape cassettes. The tape cassette also has a recess 8 defined between and contiguous to the tape outlets 6, 7, and serving as a mouth for receiving the tape loading guides 32, 33 for loading the magnetic tape T.

In a tape cassette with front and inner lids that are combined with one another, when the front and inner lids are to be opened, the inner lid cannot be displaced away from the magnetic tape unless the front lid is turned through a greater angle than those front lids which are not associated with any inner lids. Therefore, the lid opening member for engaging and turning the front lid has to be increased in height.

For this reason, a tape cassette with both front and inner lids cannot be used in those VTRs which are designed for use with tape cassettes that have no inner lids. Stated another way, tape cassettes with only front lids and tape cassette with both front and inner lids are not compatible on VTRs.

JP-A-60 214.488 discloses a cassette with a single lid with an abutting tongue on it, the abutting tongue being engageable with a lid opening member, in order to reduce the stroke of the lid opening member.

In Figures 1A and 1B, the wide tape outlets 6, 7 allow the magnetic tape T to traverse the triangular areas As, At while it is being drawn out of the cassette casing and guided by the tape loading guides 32, 33 to follow the tape path. The front wall of the cassette casing has a recess 21 defined therein adjacent to and outwardly of the tape outlet 7, which is positioned near the tape reel 5 that may be a takeup reel. The recess 21 serves to receive the lid opening member for opening the front lid of the tape cassette. The triangular area At at the tape outlet 7 is shaped such that it is pointed inwardly in order to prevent the magnetic tape T from contacting the inner wall portion which defines the recess 21 and projects into the cassette casing.

The tape path is thus required to be located inwardly of the arrow in Figure 1A, and such a requirement imposes a limitation that fails to achieve the effective utilisation of the deck surface in the VTR. To avoid the above shortcoming, a guide post P may be added in front of the tape outlet 7, as shown in Figure 1B, to direct the magnetic tape T outwardly. However, the magnetic tape T may be damaged by the guide post P since the coated magnetic layer of the magnetic tape T makes sliding contact with the guide post P.

According to the invention there is provided a tape cassette comprising:
a cassette casing having a pair of tape outlets defined in a front wall thereof on opposite sides thereof, the front wall having a mouth defined therein between the tape outlets;
a pair of tape reels rotatably disposed in the cassette casing;
a magnetic tape wound around the tape reels, the magnetic tape including a length led out of the tape outlets and extending across the mouth;
a front lid pivotally mounted on the cassette casing normally to cover a front side of the length of the magnetic tape and the tape outlets, the front lid being angularly movable by a lid opening member to open the mouth and the tape outlets; and
an inner lid angularly movably mounted on an inner surface of the front lid normally to cover a rear side of the length of the magnetic tape, the inner lid being angularly movable to open the mouth in response to the angular movement of the front lid, so that the front and rear sides of the length of the magnetic tape are normally covered by the front and inner lids, respectively in the mouth;
characterised in that said front wall of the cassette casing has a recess at one of the tape outlets, to receive the lid opening member with said one of the tape outlets being wide enough to contain a front portion of the recess therein;
the front lid has an abutting tongue which normally closes the recess, the abutting tongue being engageable by the lid opening member in a final period of the angular movement of the front lid to open the mouth; and
the arrangement is such that when the front lid closes the mouth, the recess is closed by the abutting tongue and during turning of the front lid by the lid opening member to open the mouth, the lid opening member abuts against the abutting tongue to turn the front lid and the inner lid in association therewith until the front and inner lids fully open the tape outlets and the mouth.

When the tape cassette is inserted into the cassette loading position in a magnetic recording and reproducing apparatus such as a VTR, the front lid is opened when it is lifted by the lid opening member. In a final period of the lid opening process, the front lid is pushed further upwardly by the lid opening member through the abutting tongue, thereby widely opening the mouth. At the same time, the inner lid is also moved away from the magnetic tape length between the tape outlets. Therefore, the mouth is fully opened, allowing the magnetic tape to be loaded along a tape path in the magnetic recording and reproducing apparatus.

Since the front lid is pushed and opened upwardly by the lid opening member through the abutting tongue, the lid opening member may be of the same height as that of a lid opening member which is used to open the front lid of a general tape cassette with no inner lid. Such a tape cassette is therefore compatible with conventional tape cassettes with respect to the lid opening member.

One of the tape outlets is preferably wide enough to contain the front portion of the recess, providing a wide region on opposite sides of the cassette casing for withdrawing the magnetic tape from the cassette casing. With such an arrangement, it is not necessary to add any tape guide posts which would otherwise make sliding contact with the magnetic layer of the magnetic tape and hence damage the magnetic layer. The tape path can therefore be designed with a large degree of freedom or flexibility.

The recess in the wide tape outlet can securely be closed by the abutting tongue when the front lid is closed, and therefore dust particles can be prevented from entering the cassette casing through the recess, thereby protecting the magnetic tape stored in the cassette casing against dust-induced damage.

The invention is diagrammatically illustrated by way of example in drawings, in which:
Figures 1A and 1B are schematic views showing a conventional tape cassette;
Figure 2 is an exploded perspective view of a tape cassette according to the invention;
Figure 3 is a perspective view of the tape cassette shown in Figure 2;
Figure 4 is a longitudinal cross-sectional view of the tape cassette shown in Figure 3;
Figures 5A to 5D are cross-sectional views taken on line V - V of Figure 4, showing the manner in which front and inner lids are opened;
Figure 6 is an enlarged fragmentary cross-sectional view of a guide groove in the tape cassette of Figure 2;
Figures 7A to 7E are cross-sectional views taken on line VII - VII of Figure 4, showing the manner in which the front and inner lids are opened;
Figure 8 is a schematic view of the tape cassette of Figure 2 showing a tape loading operation;
Figure 9 is an enlarged cross-sectional view of a portion of a tape cassette according to another embodiment of the invention;
Figure 10 is a bottom view of the tape cassette shown in Figure 9;
Figure 11 is a longitudinal cross-sectional view of a tape cassette according to still another embodiment of the invention, showing the manner in which front and inner lids are opened;
Figure 12 is a fragmentary transverse cross-sectional view of the tape cassette shown in Figure 11, with the lids opened;
Figure 13 is a longitudinal cross-sectional view of a tape cassette according to yet another embodiment of the invention; and
Figure 14 is a fragmentary transverse cross-sectional view taken on line XIV - XIV of Figure 13.

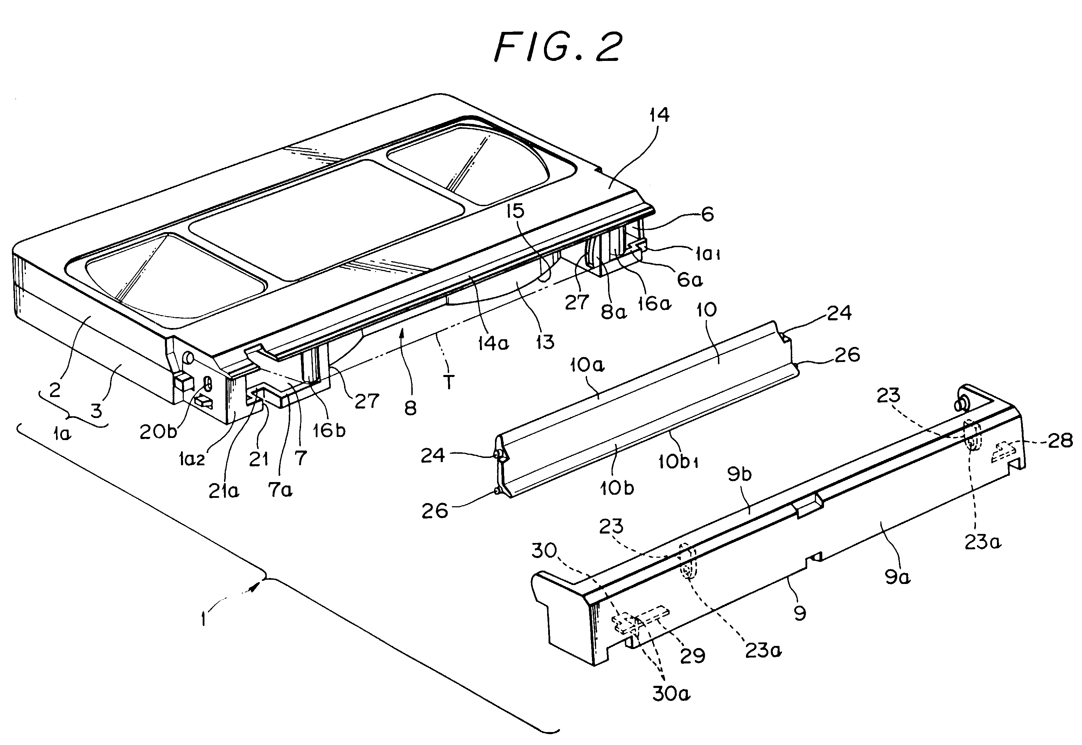

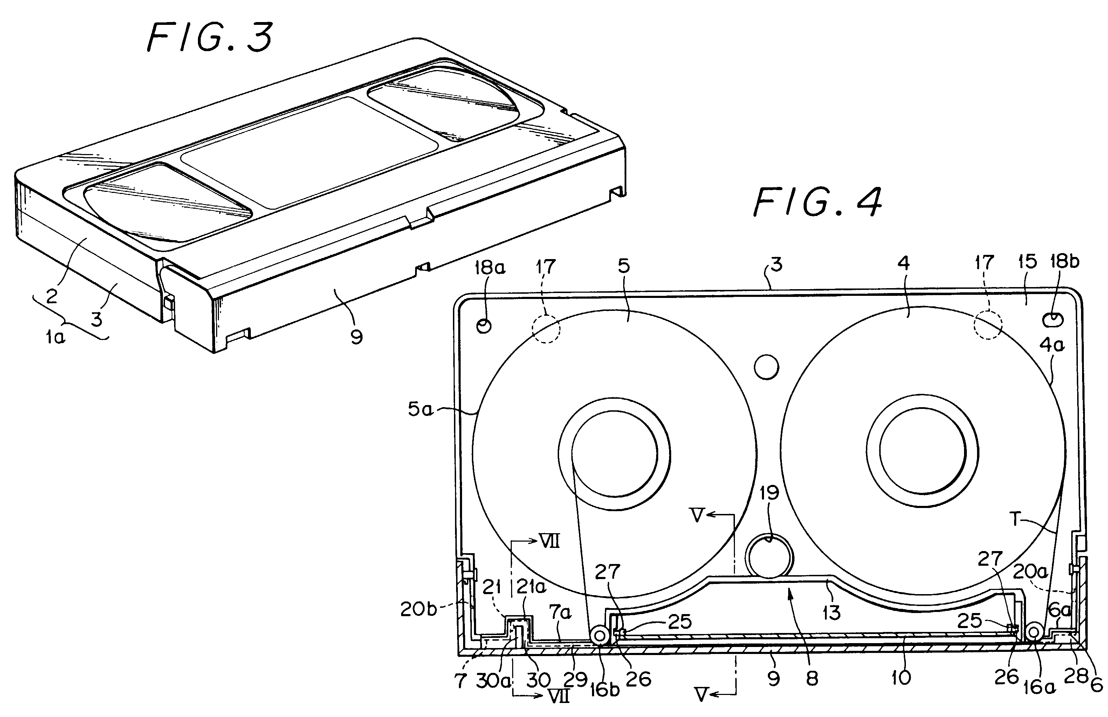

Referring to the drawings, Figure 2 shows a tape cassette 1 comprising a cassette casing 1a composed of a rectangular upper half 2 and a rectangular lower half 3 which are moulded of synthetic resin and interfitted together. As shown in Figure 4, a pair of tape reels 4, 5 is rotatably housed in the cassette casing 1a, and a magnetic tape T is wound around and extends between the tape reels 4, 5.

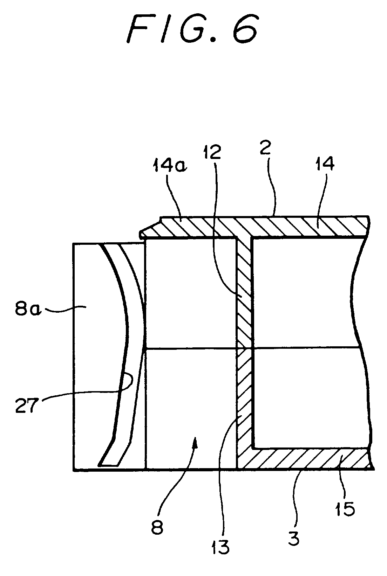

The cassette casing 1a has a pair of relatively wide tape outlets 6, 7 defined in a front wall thereof at opposite ends thereof. The upper and lower casing halves 2, 3 have a recess defined centrally in respective front walls 12, 13 (see Figure 6) thereof between the tape outlets 6, 7. The upper half 2 has an upper wall 14 with a front edge 14a extending forwardly beyond the front wall 12. The lower half 3 has a lower wall 15 with its front edge extending along the front wall 13 thereof. The front walls 12, 13 of the upper and lower halves 2, 3, and the front edge 14a of the upper wall 14 of the upper half 2 jointly define the above mentioned recess, which serves as a mouth 8 to receive tape loading guides to withdraw the magnetic tape T from the cassette casing 1a.

The mouth 8 is normally closed on its front side by a front lid 9 which can be turned upwardly to open the mouth 8, and is open on its lower side

The upper and lower halves 2, 3 and the front lid 9 make up a casing whose dimensions are either the same as or slightly longer than corresponding VHS-format tape cassette dimensions in the longitudinal direction. Upstanding tape guides 16a, 16b are mounted on the lower half 3 inwardly of the tape outlets 6, 7, respectively, near the mouth 8. The tape guide 16b is held in substantial alignment with the centre of the tape reel 5a when the cassette casing 1a is viewed from the side of the mouth 8. The lower wall 15 of the lower half 3 has reference bearing surfaces 17, a reference pin receiving circular hole 18a, and a reference pin receiving oblong hole 18b in its rear portion, and also has a sensor inserting hole 19 and light receiving holes 20a, 20b in its front portion. The lower wall 15 also has a recess 21 defined in its front edge near the tape reel 5, which tape reel 5 may be a takeup reel. The recess 21 serves to receive therein a lid opening member of magnetic recording and reproducing apparatus such as a VTR.

The recess 21 is positioned within the tape outlet 7 which is located adjacent to the tape reel 5 in a position according to the VHS format. The tape outlet 7 is of a wide configuration containing a front portion of the recess 21 therein. The tape outlet 7 has a front edge 7a which includes a peripheral edge 21a of the recess 21. The tape outlet 6 is positioned adjacent to the tape reel 4, which may be a supply reel, and also has a front edge 6a. The front edges 7a, 6a are formed as projecting edges or ridges which are slightly lower than lower flanges 4a, 5a of the respective take reels 4, 5.

An inner lid 10 is mounted on the front lid 9 in spaced-apart relationship to an inner surface of the front wall 9a thereof, as shown in Figures 2 and 4. More specifically, the front lid 9 is substantially C-shaped in cross section and has a pair of laterally spaced brackets 23 projecting from an inner surface of an upper wall 9b contiguous to the front wall 9a. The brackets 23 have respective pin holes 23a in which there is inserted a pair of support pins 24 projecting laterally from upper opposite sides of the inner lid 10.

Therefore, the inner lid 10 is angularly movable with respect to the front lid 9 about the support pins 24. The inner lid 10 has an upper end 10a held against an inner surface of the upper wall 9b of the front lid 9 and a forwardly inclined lower end 10b whose edge 10b1 is held against an inner surface of the front wall 9a of the front lid 9. A pair of brackets 25 (Figure 4) projects laterally from opposite sides of the inner lid 10 just behind the lower end 10b. From the brackets 25, there project respective guide pins 26 extending laterally outwardly and slidably inserted in respective guide grooves 27 defined respectively in inner wall surfaces 8a of the cassette casing 1a which partly define the mouth 8. Each of the guide grooves 27 is composed of a lower rearwardly inclined portion, a central substantially vertical portion, and an upper forwardly inclined portion.

The front wall 9a of the front lid 9 has abutting ledges 28, 29 on its inner surface respectively at opposite lower ends in alignment respectively with the tape outlets 6, 7 of the cassette casing 1a. The abutting ledge 29 aligned with the tape outlet 8 has an integral abutting tongue 30 shaped so as to cover the recess 21 at its upper end.

When the front lid 9 is closed to close the mouth 8 of the cassette casing 1a, the abutting ledges 28, 29 are held against respective upper surfaces of the front edges 6a, 7a of the tape outlets 6, 7, and the abutting tongue 30 integral with the abutting ledge 29 is positioned in abutment against an upper surface of the peripheral edge 21a of the recess 21. Therefore, the tape outlets 6, 7 are closed by the inner surface of the front wall 9a of the front lid 9 and the abutting ledges 28, 29, and the recess 21 is closed by the abutting tongue 30, so that the interior of the cassette casing 1a is substantially fully hermetically sealed.

The abutting tongue 30 is reinforced by ribs 30a extending between and joined to the abutting tongue 30 and the inner surface of the front wall 9a of the front lid 9.

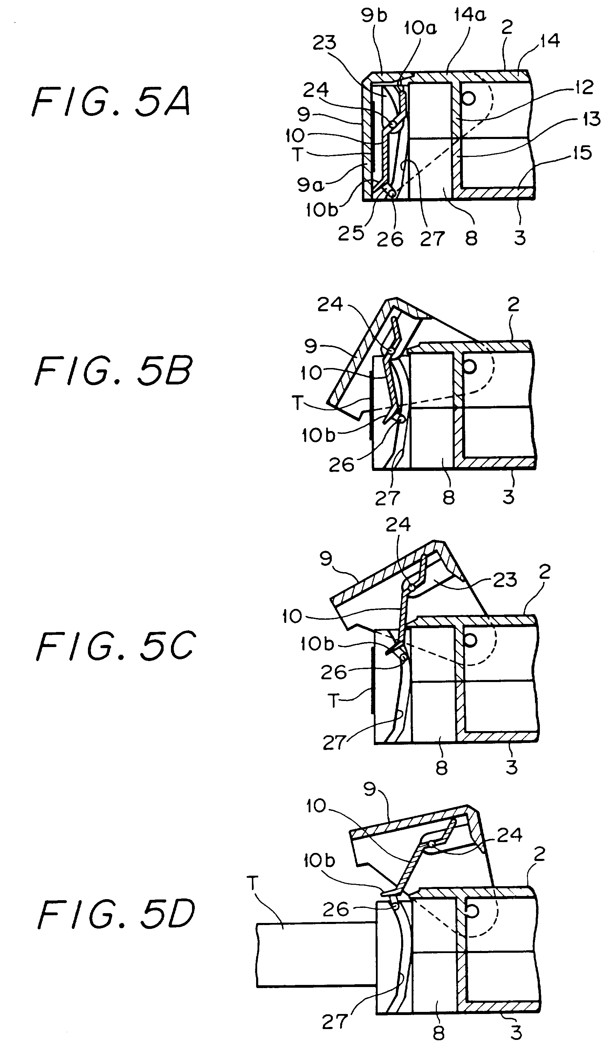

The length of the magnetic tape T which is led out from the tape outlets 6, 7 and extends under tension in the mouth 8 in its front area is normally covered on its front side by the front lid 9 and on its rear side by the inner lid 10, as shown in Figures 4 and 5A. Since the upper and lower ends of the inner lid 10 are held in abutting engagement with the front lid 9, the length of the magnetic tape T which is positioned in the mouth 8 is substantially fully sealed for protection against damage due to dust or the like. Therefore, the tape cassette 1 is highly reliable for protection of the magnetic tape T.

When the tape cassette 1 is inserted into a video tape recorder (VTR), the front lid 9 and the inner lid 10 are opened to expose the front and rear sides of the magnetic tape T in the mouth 8, and tape loading guides are inserted in the mouth 8 behind the tape T to load the magnetic tape T in the VTR.

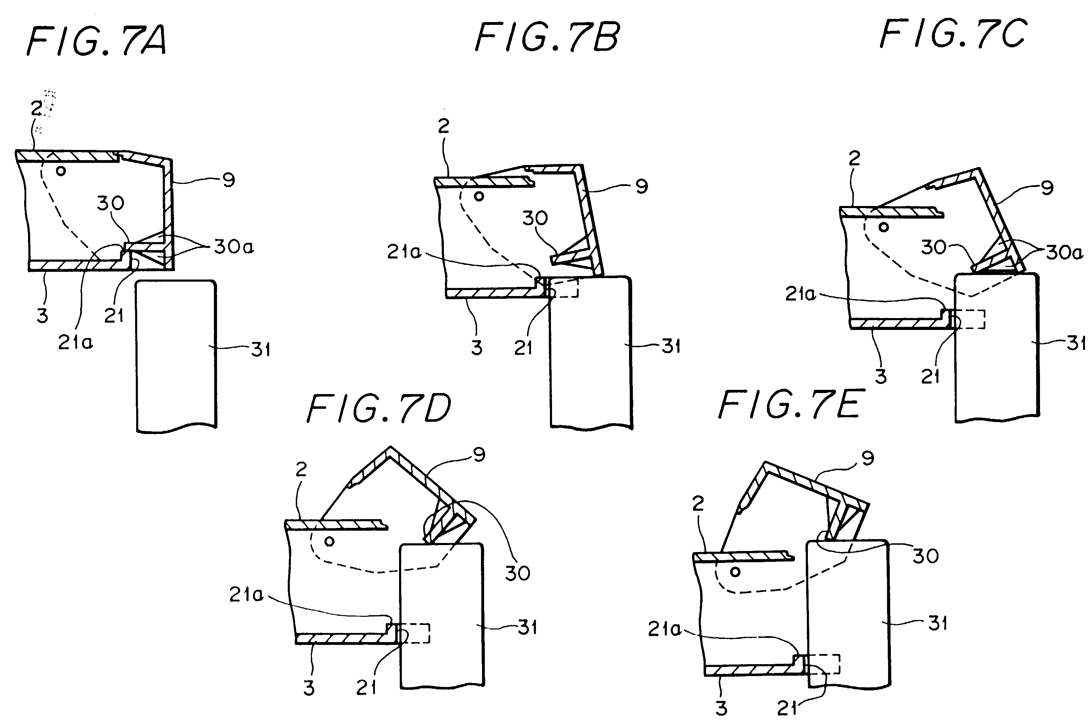

More specifically, the tape cassette 1 is inserted into a cassette holder in the VTR, and then progressively lowered into a cassette loading position, whereupon the lower end of the front lid 9 is engaged by the upper end of a lid opening member 31 (Figure 7A) of the VTR located in the cassette loading position in vertical alignment with the recess 21 of the cassette casing 1a. As the tape cassette 1 is further moved downwardly into the cassette loading position, the lid opening member 31 is inserted, from below, into the recess 21, pushing the front lid 9 upwardly. The front lid 9 now starts to turn upwardly as shown in Figure 7B. While the front lid 9 is being turned upwardly, the point of contact with the lid opening member 31 shifts from the lower end of the front lid 9 to the free end of the abutting tongue 30, as shown in Figure 7C. On continued downward movement of the tape cassette 1, the front lid 9 is pushed upwardly by the lid opening member 3 only by way of the abutting tongue 30, as shown in Figure 7D. When the tape cassette 1 is fully loaded in the cassette loading position, the front lid 9 is largely turned upwardly by the lid opening member 31 through the abutting tongue 30, i.e., is fully opened, as shown in Figure 7E. The final vertical displacement of the front lid 9 when it is fully opened is greater than it would be if the front lid 9 were turned upwardly by the lid opening member 31 engaging only the lower end of the front lid 9.

While the front lid 9 is being thus opened, the inner lid 9 is turned upwardly about the support pins 24. As the guide pins 26 are guided by the lower rearwardly inclined portions of the guide grooves 27, respectively, the inner lid 9 is moved upwardly and rearwardly as shown in Figure 5B, away from the inner surface of the front wall 9a of the front lid 9, with the lower end 10b moving quickly rearwardly away from the magnetic tape T.

Consequently, even if the magnetic tape T slightly slackens, the front lid 9 and the inner lid 10 are held out of contact with the magnetic tape T, and hence do not damage the magnetic tape T.

During an intermediate period of the lid opening operation, as shown in Figure 5C, the lower end 10b of the inner lid 10 is moved substantially in sufficiently spaced-spart relation to the rear side of the magnetic tape T as the guide pins 26 are guided by the central substantially vertical portions of the guide grooves 27.

During a final period of the lid opening operation, as shown in Figure 5D, the guide pins 26 are guided by the upper forwardly inclined portions of the guide grooves 27, causing the inner lid 10 to turn about the support pins 24, so that the lower end 10b is moved into a position above the mouth 8 of the cassette casing 1a, thereby fully opening the mouth 8.

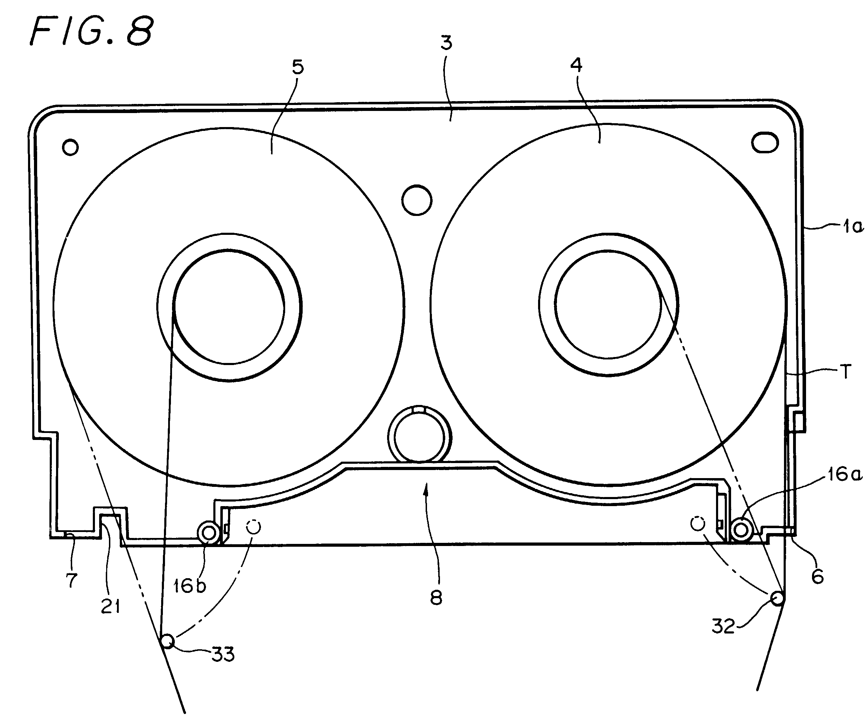

After the front lid 9 and the inner lid 10 are opened, fully opening the tape outlets 6, 7 and the mouth 8, tape loading guides 32, 33 which have been inserted into the mouth 8 are moved out of the mouth 8, as shown in Figure 8, to withdraw the magnetic tape T from the tape outlets 6, 7.

Inasmuch as the tape outlets 6, 7 are relatively wide, the magnetic tape T can be led out of the cassette casing 1a without contact with the tape guides 16a, 16b. The tape outlet 7 near the takeup tape reel 5 is of a wide shape containing the recess 21. Therefore, the magnetic tape T can be led out from the tape outlet 7 closely to an outer side of the tape cassette 1.

When the tape cassette 1 is unloaded from the VTR, the front lid 9 and the inner lid 10 are closed in a sequence which is the exact reversal of the above lid opening process.

As described above, the front lid 9 to which the inner lid 10 is attached has the abutting tongue 30 for abutment against the lid opening member 31, and the front lid 9 is opened by the lid opening member 31 only by the abutment tongue 30 during the final period of the lid opening movement. Therefore, even if the lid opening member 31 is of a height designed for opening the front lids of general tape cassettes with no inner lid, e.g., a VHS-format tape cassette, the front lid 9 can still be sufficiently opened, with the inner lid 10 turned above the mouth 8, by the lid opening member 31, fully to open the mouth 8.

Accordingly, the tape cassette 1 is compatible with general VHS-format tape cassettes with respect to the lid opening member 31.

In the above embodiment, the front lid 9 also has bias means for urging it in a closing direction and lock means for locking it in a closed position. Such bias and lock means are well known in the art and are not shown and described in detail.

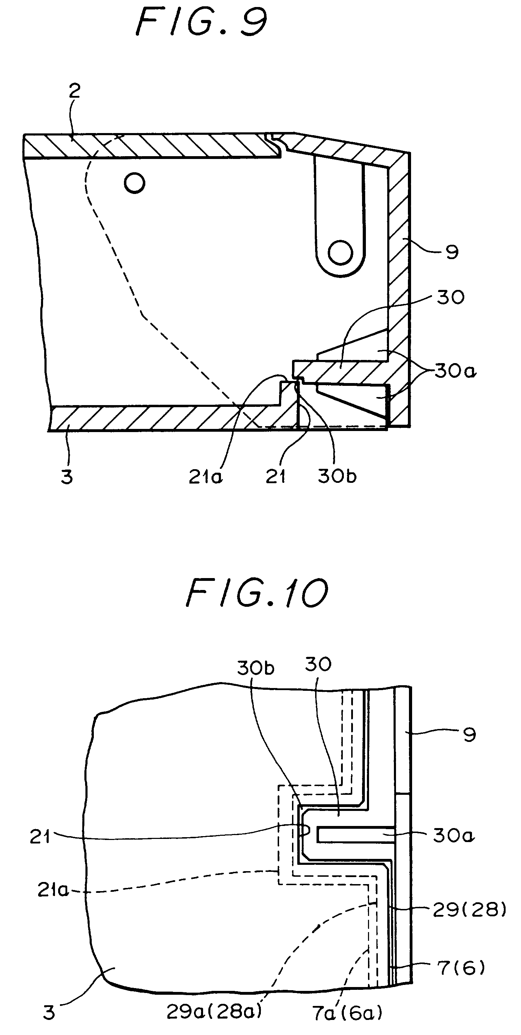

The tape cassette shown in Figures 9 and 10 is designed to give better protection against dust entry when the front lid is closed. More specifically, the abutting ledges 28, 29 and the abutting tongue 30 of the front lid 9 have respective lower peripheral step surfaces 28a, 29a, 30b which are fittingly held respectively against the front edges 6a, 7a of the tape outlets 6, 7 and the peripheral edge 21a of the recess 21. For smooth fitting engagement between the lower peripheral step surfaces 29a, 30b and the edges 7a, 21a, the corners between the front edge 7a and the peripheral edge 21a and the corners of the step surface 30b are preferably cut off, tapered, or otherwise bevelled.

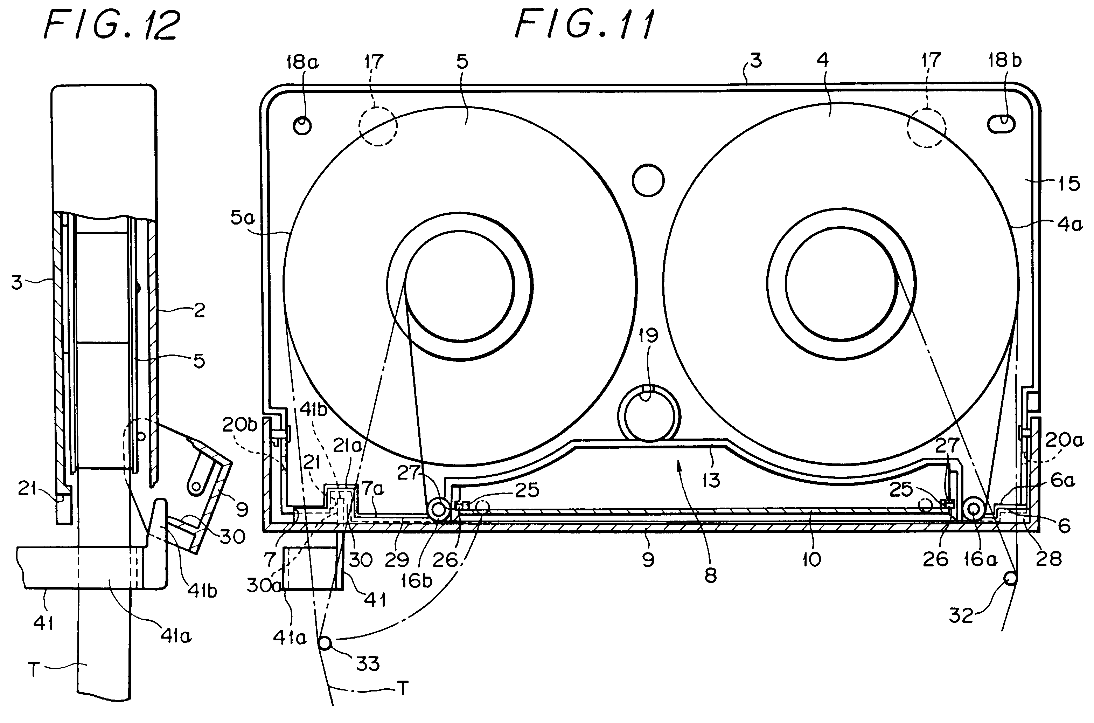

Figures 11 and 12 show a tape cassette in which the front lid 9, as shown in Figures 11 and 12, is opened by a lid opening member 41 which has the same height as the lid opening member 31 shown in Figures 7A to 7E. The lid opening member 41 has a support base 41a spaced a distance forwardly from the cassette loading position, the support base 41a being vertically disposed in outwardly spaced-apart relationship to the recess 21. The support base 41a has an upper end portion bent to one side, and the bent end portion has a tip end also bent upwardly into an engaging finger 41b in alignment with the recess 21. Therefore, the engaging finger 41b can be inserted into the recess 21 as the tape cassette 1 is loaded.

When the tape cassette 1 is lowered into the cassette loading position, the engaging finger 41b is inserted into the recess 21 and engages the lower end of the front lid 9. On further descent of the tape cassette 1, the front lid 9 is pushed and turned upwardly by the engaging finger 41b. The point of contact with the engaging finger 41b is shifted to the rear end of the abutting tongue 30, whereupon the front lid 9 is largely turned upwardly by the engaging finger 41 through contact with the abutting tongue 30. The tape outlets 6, 7 and the mouth 8 are now opened, allowing the magnetic tape T to be withdrawn from the cassette casing.

When the magnetic tape T is withdrawn from the cassette casing by the tape loading guides 32, 33, the magnetic tape T is led from the tape outlet 7 below the engaging finger 41b of the lid opening member 41, i.e., with the support base 41a positioned out of the tape path. Thus, the magnetic tape T is led from the tape outlet 7 closely to an outer side of the tape cassette, without any additional tape guide which would otherwise make sliding contact with the magnetic layer of the magnetic tape T. Consequently, the tape path in the VTR can be designed with a greater degree of freedom or flexibility.

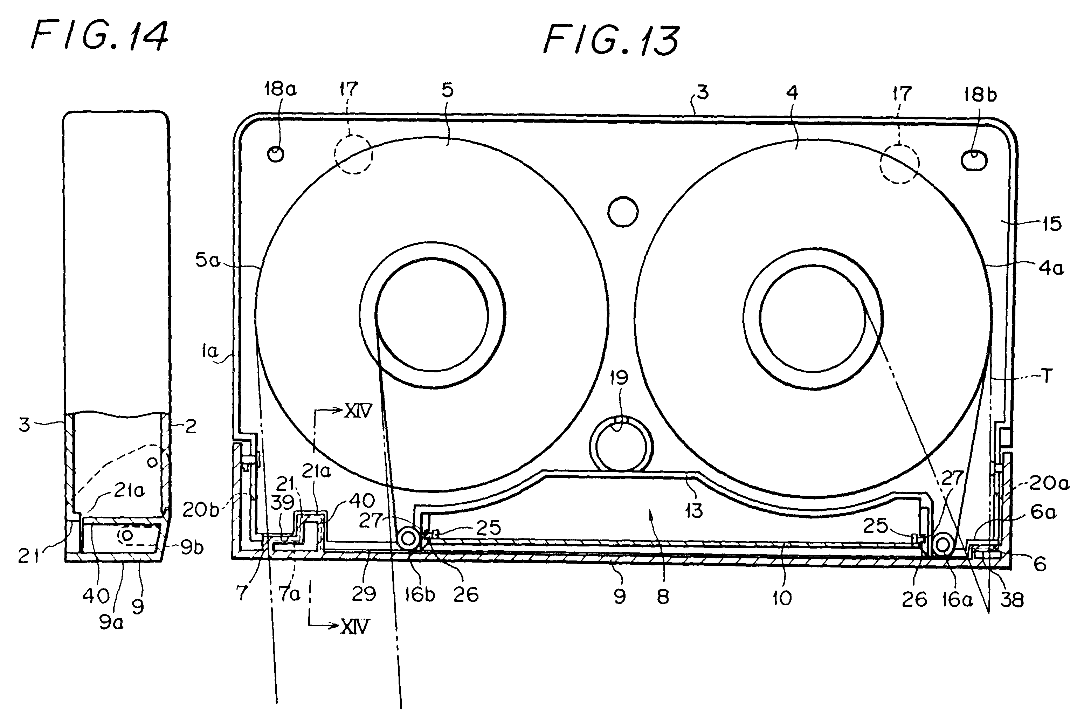

Figures 13 and 14 show a tape cassette with differently shaped abutments and abutment portion to close the tape outlets 6, 7 and the recess 21.

The front lid 9 shown in Figures 13 and 14 is ejected from a mould in a different direction after it is moulded of synthetic resin. More specifically, the front lid 9 has abutting ledges 38, 39 and an abutting tongue 40 which extend from the upper wall 9b parallel to the front wall 9a. When the front lid 9 is closed, the lower edges of the abutting ledges 38, 39 and the abutting tongue 40 are held in abutment against the front edges 6a, 7a of the tape outlets 6, 7 and the peripheral edge 21a of the recess 21, thereby closing the tape outlets 6, 7 and the recess 21.

The abutting ledges 38, 39 and the abutting tongue 40 of the front lid 9 are also effective to prevent dust from entering the cassette casing 1a when the front lid 9 is closed. When the front lid 9 is to be opened, a lid opening member in a VTR engages and pushes upwardly the lower edge of the abutting tongue 40 to lift and open the front lid 9 to a sufficient height. Accordingly, the tape outlets 6, 7 and the recess 21 can be opened widely by the front lid 9 and inner lid 10 combined therewith.

The tape cassettes according to all the above described embodiments may be of dimensions different from the VHS-format tape cassette dimensions, but the recesses 21 of the tape cassettes should be positioned so that the lid opening member can be inserted therein in VTRs designed according to the VHS format.

The length of the magnetic tape which extends between the tape outlets of the cassette casing is substantially fully sealed by the front and inner lids for protection against dust, and the inner lid can be opened at the same time that the front lid is opened by the lid opening member which is designed for use with tape cassettes with no inner lids.

Thus, the tape cassettes described are compatible with conventional tape cassettes with respect to the lid opening member, so that the existing VTR or magnetic recording and reproducing apparatus can be used with tape cassettes according to the invention without major modifications.

Since the tape outlets of the cassette casing are relatively wide, a wide region for withdrawing the magnetic tape can be defined on opposite sides of the cassette casing, resulting in a large degree of freedom or flexibility in the design of the tape path for the magnetic tape withdrawn from the cassette casing.

## Claims

1. A tape cassette (1) comprising:
a cassette casing (1a) having a pair of tape outlets (6, 7) defined in a front wall (12, 13) thereof on opposite sides thereof, the front wall (12, 13) having a mouth (8) defined therein between the tape outlets (6, 7);
a pair of tape reels (4, 5) rotatably disposed in the cassette casing (1a);
a magnetic tape (T) wound around the tape reels (4, 5), the magnetic tape including a length led out of the tape outlets and extending across the mouth (8);
a front lid (9) pivotally mounted on the cassette casing (1a) normally to cover a front side of the length of the magnetic tape and the tape outlets (6, 7), the front lid (9) being angularly movable by a lid opening member (31, 41) to open the mouth (8) and the tape outlets (6, 7); and
an inner lid (10) angularly movably mounted on an inner surface of the front lid (9) normally to cover a rear side of the length of the magnetic tape, the inner lid (10) being angularly movable to open the mouth (8) in response to the angular movement of the front lid (9), so that the front and rear sides of the length of the magnetic tape are normally covered by the front (9) and inner (10) lids, respectively in the mouth (8);
characterised in that said front wall of the cassette casing has a recess (21) at one (7) of the tape outlets (6, 7), to receive the lid opening member (31, 34) with said one (7) of the tape outlets (6, 7) being wide enough to contain a front portion of the recess (21) therein;
the front lid (9) has an abutting tongue (30) which normally closes the recess (21), the abutting tongue (30) being engageable by the lid opening member (31, 41) in a final period of the angular movement of the front lid (9) to open the mouth (8); and
the arrangement is such that when the front lid (9) closes the mouth (8), the recess (21) is closed by the abutting tongue (30) and during turning of the front lid (9) by the lid opening member (31, 41) to open the mouth (8), the lid opening member abuts against the abutting tongue (30) to turn the front lid (9) and the inner lid (10) in association therewith until the front and inner lids fully open the tape outlets (6, 7) and the mouth (8).

2. A tape cassette according to claim 1, wherein the front lid (9) has reinforcing ribs (30a) joined to the abutting tongue (30).

3. A tape cassette according to claim 1, wherein the front lid (9) has a front wall (9a) and an upper wall (9b) joined thereto, the abutting tongue (30) extending from the front wall (9a) parallel to the upper wall (9b) and having a lower edge which normally closes the recess.

4. A tape cassette according to claim 1, wherein the cassette casing (1a) has a shape which is substantially the same as the shape of a VHS-format tape cassette.

5. A tape cassette according to claim 1, further including a tape guide (16b) to guide the magnetic tape to extend over the mouth (8), the tape guide (16b) being positioned in said tape outlet (7) containing the recess (21), near the mouth (8), the tape guide (10b) being substantially aligned with one (5a) of the tape reels which is positioned near the tape guide (6b) when the cassette casing is viewed from the side of the front wall (12, 13) thereof.

## Patentansprüche

1. Bandkassette (1), mit:
einem Kassettengehäuse (la), das zwei Bandauslässe (6, 7) aufweist, die auf gegenüberliegenden Seiten in einer Vorderwand (12, 13) angeordnet sind, wobei die Vorderwand (12, 13) einen Öffnungsbereich (8) besitzt, der zwischen den Bandauslässen (6, 7) angeordnet ist;
zwei Bandspulen (4, 5), die drehbar im Kassettengehäuse (la) angeordnet sind;
einem Magnetband (T), das um die Bandspulen (4, 5) gewickelt ist, wobei das Magnetband eine Länge aufweist, die aus den Bandauslässen herausgeführt ist und sich quer zum Öffnungsbereich (8) erstreckt;
einer Vorderklappe (9), die drehbar auf dem Kassettengehäuse (la) befestigt ist, um normalerweise eine Vorderseite der Länge des Magnetbandes und der Bandauslässe (6, 7) zu überdecken, wobei die Vorderklappe (9) durch ein Klappenöffnungselement (31, 41) verschwenkbar ist, um den Öffnungsbereich (8) und die Bandauslässe (6, 7) zu öffnen; und
einer Innenklappe (10), die auf einer inneren Oberfläche der Vorderklappe (9) schwenkbar befestigt ist, um normalerweise eine Rückseite der Länge des Magnetbandes abzudekken, wobei die Innenklappe (10) verschwenkbar ist, um den Öffnungsbereich (8) in Abhängigkeit von der Schwenkbewegung der Vorderklappe (9) zu öffnen, so daß die vordere und hintere Seite der Länge des Magnetbandes normalerweise durch die Vorderklappe (9) und Innenklappe (10) entsprechend im Öffnungsbereich (8) bedeckt werden;
**dadurch gekennzeichnet**, daß
die Vorderwand des Kassettengehäuses eine Ausnehmung (21) an einem (7) der Bandauslässe (6, 7) hat, um das Klappenöffnungsteil (31, 34) zu empfangen, wobei der eine (7) der Bandauslässe (6, 7) weit genug ist, um einen Vorderbereich der Ausnehmung darin (21) aufzunehmen;
die Vorderklappe (9) eine Anschlagzunge (30) hat, die normalerweise die Ausnehmung (21) verschließt, wobei die Anschlagzunge (30) an das Klappenöffnungsteil (31, 41) in einer Endperiode der Schwenkbewegung der Vorderklappe (9) angreifen kann, um den Öffnungsbereich (8) zu öffnen; und
die Anordnung derart ist, daß, wenn die Vorderklappe (9) den Öffnungsbereich (8) verschließt, die Ausnehmung (21) durch die Anschlagzunge (30) verschlossen ist, und während die Vorderklappe (9) durch das Klappenöffnungsteil (31, 41) verdreht wird, um den Öffnungsbereich (8) zu öffnen, das Klappenöffnungsteil gegen die Anschlagzunge (30) stößt, um die Vorderklappe (9) und die damit verbundene Innenklappe (10) zu verdrehen, bis die Vorderklappe und die Innenklappe die Bandauslaßöffnungen (6, 7) und den Öffnungsbereich (8) völlig öffnen.

2. Bandkassette nach Anspruch 1, wobei die Vorderklappe (9) Verstärkungsrippen (30a) aufweist, die mit der Anschlagzunge (30) in Verbindung stehen.

3. Bandkassette nach Anspruch 1, wobei die Vorderklappe (9) eine Vorderwand (9a) und eine obere Wand (9b) aufweist, die damit verbunden ist, wobei die Anschlagzunge (30) sich von der Vorderwand (9a) aus parallel zur oberen Wand (9b) erstreckt und einen unteren Rand besitzt, der normalerweise die Ausnehmung verschließt.

4. Bandkassette nach Anspruch 1, wobei das Kassettengehäuse (la) eine Form aufweist, die im wesentlichen gleich der Form einer Bandkassette mit einem VHS-Format ist.

5. Bandkassette nach Anspruch 1, die weiter eine Bandführung (16b) besitzt, um das Magnetband zu führen, damit es sich über den Öffnungsbereich (8) erstreckt, wobei die Bandführung (16b) in dem Bandauslaß (7) positioniert ist, der die Ausnehmung (21) in der Nähe des Öffnungsbereichs (8) enthält, wobei die Bandführung (10b) in etwa mit einer (5a) der Bandspulen fluchtet, welche in der Nähe der Bandführung (6b) angeordnet ist, wenn das Kassettengehäuse von der Seite der Vorderwand (12, 13) betrachtet wird.

## Revendications

1. Cassette (1) de bande, comprenant :
un carter (1a) de cassette ayant deux sorties (6, 7) de bande délimitées dans une paroi avant (12, 13) sur les côtés opposés, la paroi avant (12, 13) ayant une embouchure (8) délimitée entre les sorties (6, 7) de bande,
deux bobines (4, 5) de bande disposées afin qu'elles puissent tourner dans le carter (1a) de la cassette,
une bande magnétique (T) enroulée autour des bobines (4, 5) et ayant un tronçon qui est extrait par les sorties de bande et qui est disposé devant l'embouchure (8),
un couvercle avant (9) monté afin qu'il puisse pivoter sur le carter (1a) de la cassette et recouvrir normalement une face avant du tronçon de la bande magnétique et les sorties (6, 7) de bande, le couvercle avant (9) étant mobile angulairement sous l'action d'un organe (31, 41) d'ouverture de couvercle afin qu'il ouvre l'embouchure (8) et les sorties (6, 7) de bande, et
un couvercle interne (10) monté à une surface interne du couvercle avant (9) afin qu'il soit mobile angulairement et qu'il recouvre normalement une face arrière du tronçon de bande magnétique, le couvercle interne (10) étant mobile angulairement afin qu'il ouvre l'embouchure (8) lors du mouvement angulaire du couvercle avant (9), si bien que les faces avant et arrière du tronçon de bande magnétique sont normalement dégagées par les couvercles avant (9) et interne (10), respectivement, à l'embouchure (8),
caractérisée en ce que la paroi avant du carter de la cassette a une cavité (21) placée à l'une (7) des sorties (6, 7) de bande pour le logement de l'organe (31, 34) d'ouverture de couvercle, l'une (7) des sorties de bande (6, 7) étant suffisamment large pour loger une partie avant de la cavité (21),
le couvercle avant (9) a une languette (30) de butée qui ferme normalement la cavité (21), la languette de butée (30) étant destinée à être au contact de l'organe d'ouverture de couvercle (31, 41) dans une période finale du mouvement angulaire du couvercle avant (9) afin que l'embouchure (8) soit dégagée, et
la disposition est telle que, lorsque le couvercle avant (9) ferme l'embouchure (8), la cavité (21) est fermée par la languette de butée (30) et, pendant la rotation du couvercle avant (9) sous l'action de l'organe d'ouverture de couvercle (31, 41) pour l'ouverture de l'embouchure (8), l'organe d'ouverture du couvercle est en butée contre la languette de butée (30) et fait tourner le couvercle avant (9) et le couvercle interne (10) en association jusqu'à ce que les couvercles avant et interne ouvrent totalement les sorties (6, 7) de bande et l'embouchure (8).

2. Cassette de bande selon la revendication 1, dans laquelle le couvercle avant (9) a des nervures de renforcement (30a) raccordées à la languette de butée (30).

3. Cassette de bande selon la revendication 1, dans laquelle le couvercle avant (9) a une paroi avant (9a) et une paroi supérieure (9b) qui lui sont raccordées, la languette de butée (30) dépassant de la paroi avant (9a) parallèlement à la paroi supérieure (9b) et ayant un bord inférieur qui ferme normalement la cavité.

4. Cassette de bande selon la revendication 1, dans laquelle le carter (la) de cassette a une configuration qui est pratiquement la même que celle d'une cassette de bande de format VHS.

5. Cassette de bande selon la revendication 1, comprenant en outre un guide (16b) de bande destiné à guider la bande magnétique afin qu'elle passe sur l'embouchure (8), le guide (16b) de bande étant disposé à la sortie (7) de bande contenant la cavité (21), près de l'embouchure (8), le guide (10b) de bande étant pratiquement aligné sur l'une (5a) des bobines de bande qui est placée près du guide (6b) de bande lorsque le carter de la cassette est vu du côté de la paroi avant (12, 13) de celui-ci.
